# EUROPÄISCHE PATENTSCHRIFT

(11) **EP 0 492 567 B1**
(45) Veröffentlichungstag und Bekanntmachung des Hinweises auf die Patenterteilung: **01.03.1995**
(21) Anmeldenummer: 91122093.7
(22) Anmeldetag: 22.12.1991
(51) Int. Cl.: C04B 11/05

(54) **Erbrannter Anhydrit, Verfahren zu seiner Herstellung und seine Verwendung**
Burned anhydrite, procedure for its production and its use
Anhydrite formée par calcination, procédé pour sa production et son utilisation

(30) Priorität: 22.12.1990 DE 4041595
(43) Veröffentlichungstag der Anmeldung: 01.07.1992
(73) Patentinhaber: Gebr. Knauf Westdeutsche Gipswerke KG, D-97343 Iphofen (DE)
(72) Erfinder: Hüller, Rolf, Dr. Dipl.-Chem., W-8712 Volkach (DE); Limmer, Bärbel, Dipl.-Ing., W-8500 Nürnberg (DE); Ruf, Heinz, Dr. Dipl.-Phys., W-8717 Mainbernheim (DE); Wirsching, Franz, Dr. Dipl.-Chem., W-8715 Iphofen (DE)
(74) Vertreter: Werner, Hans-Karsten, Dr.Dipl.-Chem.

(56) Entgegenhaltungen:
- EP-A- 0 513 779
- DE-A- 3 901 428
- SOVIET INVENTIONS ILLUSTRATED, Sektion Ch, Woche 8616, 28. Mai 1986 DERWENTPUBLICATIONS LTD., London, L02

## Beschreibung

Gegenstand der vorliegenden Erfindung ist aus in technischen Prozessen anfallenden feinteiligen Gipsen, insbesondere aus Rauchgasgipsen erbrannter Anhydrit, Verfahren zu seiner Herstellung sowie seine Verwendung für die Herstellung von Füll- und Gießmassen sowie Fließestrich.

Es ist bekannt, Calciumsulfat-Dihydrat natürlicher Herkunft oder aus in technischen Prozessen anfallenden Gipsen zu verschiedenen abbindefähigen Formen zu calcinieren, insbesondere β-Halbhydrat, Putzgips, Anhydrit II sowie auch Mischformen. Das am häufigsten angewendete Verfahren ist bisher das Calcinieren auf dem Rostband, welches jedoch ein vorheriges Brikettieren und Stückigmachen erforderlich macht. Es ist weiterhin bekannt, feinteiliges Calciumsulfat-Dihydrat, insbesondere Rauchgasgips, im nicht-brikettierten Zustand zu calcinieren, beispielsweise in Drehrohröfen im Gleichstrom oder im Gegenstrom, sowie in Kochern. Diese Verfahren weisen den Nachteil auf, daß ein erheblicher Anteil des feinteiligen calcinierten Produktes als Staub mit den Abgasen ausgetragen wird und damit andere Produkteigenschaften zeigt als der Hauptstrom des calcinierten Produktes, dem er wieder zugeführt wird. Es entstehen dadurch uneinheitliche Produkte. Es werden mit den bisher bekannten technischen Brennaggregaten in allen Fällen keine reinen Phasen als Calcinierungsprodukte erhalten, sondern immer Phasengemische; vergl. Ullmann Encyclopedia of Industrial Chemistry, 1985, Vol. A4, Seite 558. Dies gilt im besonderen Maße auch für das Calcinieren in einer Wirbelschicht, so daß dieses Verfahren besonders im Hochtemperaturbereich nicht zu den gewünschten Produktqualitäten führt.

Aus der DE-A-38 27 613 ist bekannt, Binder für Anhydrit-Fließestrich durch thermische Behandlung eines Industriegipses herzustellen. Dieses Verfahren soll vorzugsweise in einem bekannten Reaktor bei Temperaturen zwischen 700 und 900°C durchgeführt werden, so daß sich ein BET-Wert zwischen 1 und 3 m²/g des Anhydrits einstellt. Als Reaktor für die thermische Behandlung des Industriegipses wird ein Drehrohrofen genannt, dem der Industriegips mit einer Körnung von 1 bis 5 mm zugeführt wird. Auch bei diesem Verfahren entstehen jedoch immer wieder unterschiedliche und schwankende Produkteigenschaften, so daß ein daraus hergestellter Anhydrit-Fließestrich ebenfalls schwankende Eigenschaften aufweist.

Der der EP-A-0 513 779 zugrundeliegende Gegenstand ist als einschlägiger Stand der Technik anzusehen. Dieses Dokument fällt unter Artikel 54(3) EPÜ. Dem Offenbarungsgehalt dieses Dokuments wurde in den Ansprüchen mittels eines Disclaimers Rechnung getragen.

Die Erfindung hat sich die Aufgabe gestellt aus in technischen Prozessen anfallenden feinteiligen Gipsen, insbesondere aus Rauchgasgipsen, gebrannten Anhydrit zur Verfügung zu stellen, der gleichmäßige und reproduzierbar gute Eigenschaften aufweist und den nach den bisher bekannten technischen Verfahren hergestellten Anhydriten deutlich überlegen ist.

Eingehende Untersuchungen der verschiedensten Verfahren, Verfahrensparameter und den Eigenschaften der letztendlich hieraus erstellten wieder abgebundenen Massen haben zu dem Ergebnis geführt, daß ein derartiger Anhydrit zumindest zwei Parameter aufweisen muß, nämlich einen Rehydratationsgrad nach 3 Tagen von mindestens 60 %, vorzugsweise 80 %, einerseits und eine Ölzahl von maximal 20 g/100 g, vorzugsweise maximal 15 g/100 g. Die Ölzahl ist zu ermitteln gemäß DIN ISO 787, Teil 5, Ausgabe Februar 1983.

Die Eigenschaften des Anhydrits sind dabei um so vorteilhafter, je höher der Rehydrationsgrad und je kleiner die Ölzahl ist. dies kann durch den Quotienten aus Rehydrationsgrad und Ölzahl ausgedrückt werden. Darüber hinaus wurde festgestellt, daß die Ölzahl in wesentlich höherem Maße als der Rehydratationsgrad Einfluß nimmt auf die Eigenschaften der endgültig wieder abgebundenen Produkte, so daß zumindest in dem hier entscheidenden Bereich die Ölzahl in der zweiten Potenz zu berücksichtigen ist. Die Ölzahl ist somit ein außerordentlich kennzeichnender Parameter, der u.a. in Zusammenhang steht mit der Korngrößenverteilung, der Kornform, der Einstreumenge, den Versteifungszeiten, der Festigkeitsentwicklung und der Rohdichte. Es wurde weiterhin festgestellt, daß die erfindungsgemäß wesentlichen Parameter des Reydratationsgrades einerseits und der Ölzahl andererseits im starken Maße durch die Art des Brennvorganges beeinflußt werden, wobei in einstufigen Brennverfahren bei Erzielung eines hohen Rehydratationsgrades auch hohe Ölzahlen bzw. bei Erzielung niedriger Ölzahlen auch niedrige Rehydratationsgrade erreicht werden. Die gewünschten Eigenschaften des Anhydrits sind jedoch reproduzierbar erhältlich in einem zweistufigen Verfahren, bei dem das Ausgangsmaterial zunächst in einer oder mehreren Stufen bei Temperaturen zwischen 200 und 500°C, vorzugsweise zwischen 350 und 500°C, ausgenommen 480-500°C, zum Anhydrit gebrannt wird, um erst dann in einer weiteren Stufe auf Temperaturen von 700 bis 900°C erhitzt zu werden.

Es wurde überraschenderweise gefunden, daß es möglich ist, durch die Nachbehandlung in einer zweiten Stufe bei Temperaturen von 700 bis 900°C die Reaktivität, ausgedrückt als Rehydratationsgrad nach 3 Tagen, von mindestens 60 %, vorzugsweise 80 % zu erhalten oder teilweise sogar noch zu steigern, dabei aber gleichzeitig die Ölzahl so zu senken, daß sie maximal noch 20 g/100 g, vorzugsweise sogar nur noch maximal 15 g/100 g beträgt.

Für die erste Brennstufe bei Temperaturen von 200 bis 500°C, vorzugsweise von 350 bis 500°C, ausgenommen 480-500°C, bis zum Anhydrit kommen prinzipiell alle bisher bekannten Brennverfahren in Frage, sofern sie geeignet sind, pulverförmigen Rauchgasgips direkt zu verarbeiten. Zu nennen sind beispielsweise Verfahren gemäß EP-B-0 286 636, DE-A-19 40 007, das sogenannte POLCAL^{(R)} gemäß Aufbereitungs-Technik 31 (1990) Nr. 8, Seiten 419 bis 426, die Trägergasverfahren gemäß Zement-Kalk-Gips, 1988, Seiten 434 bis 438, oder zirkulierende Wirbelschichtanlagen, vergl. Kraftwerk und Umwelt 1989, Seiten 282 bis 285.

Auch die Nachbehandlung in der zweiten Stufe bei Temperaturen von 700 bis 900°C kann prinzipiell wiederum in einem Trägergasverfahren erfolgen. Es ist jedoch ebenfalls möglich, diese in anderen bekannten Brennaggregaten durchzuführen, z.B. einem Drehrohrofen. Von allen untersuchten Brennaggregaten hat sich die zirkulierende Wirbelschicht für beide Verfahrensstufen als besonders geeignet erwiesen.

Es wurde gefunden, daß beim Calcinieren von feinteiligem Calciumsulfat-Dihydrat, insbesondere Rauchgasgips, in einer zirkulierenden Wirbelschicht lokale Überhitzungen nahezu völlig vermieden werden können, so daß es möglich ist, durch Einstellung des zirkulierenden Wirbelbetts auf bestimmte Temperaturen, besser definierte Calcinierungsprodukte mit einheitlichen Phasen und reproduzierbaren Eigenschaften zu erhalten. Damit läßt sich zum Beispiel auch das Abbindeverhalten der Calcinierungsprodukte wesentlich präziser einstellen als es nach allen bisher bekannten Calcinierungsverfahren möglich war. Diese guten Ergebnisse können damit erklärt werden, daß in der zirkulierenden Wirbelschicht der Wärmeaustausch zwischen Feststoff und Gas wesentlich intensiver und besser regulierbar ist als beispielsweise in Drehrohröfen oder einer klassischen Wirbelschicht und ein sehr kleiner Temperaturgradient existiert. Weiterhin lassen sich diese Ergebnisse daraus erklären, daß feinteiliges Calciumsulfat-Dihydrat, insbesondere Rauchgasgips, in einer zirkulierenden Wirbelschicht exzellente Fließeigenschaften aufweist, so daß es ohne weiteres möglich ist, eine zirkulierende Wirbelschicht aufzubauen. Offensichtlich behält Calciumsulfat auch in seinen verschiedenen Hydratstufen in der zirkulierenden Wirbelschicht weitgehend seine Korngrößenverteilung bei, so daß es nicht durch Abrieb oder interne Mahlvorgänge zu einer erheblichen Veränderung der Korngrößenverteilung und damit der Fließeigenschaften kommt. Dies schließt jedoch nicht aus, daß dem feinteiligen Rauchgasgips zur Verbesserung der Fließeigenschaften geeignete Zusätze zugegeben werden, besonders im Hochtemperaturbereich.

Die Verweilzeit und der Durchsatz können bei diesem Verfahren gesteuert werden durch Veränderungen der Bettdichte und damit des Druckverlustes oder aber durch Veränderung von Zufuhr und Abzugsmenge bei gleicher Bettdichte.

Die zirkulierende Wirbelschicht unterscheidet sich von der klassischen Wirbelschicht durch eine hohe Geschwindigkeit des Gases und eine größere Ausdehnung des Wirbelbettes im Vergleich zur klassischen Wirbelschicht. Der Feststoffdurchsatz einer zirkulierenden Wirbelschicht ist bereits deutlich höher als in der klassischen Wirbelschicht, liegt jedoch noch unter dem Feststoffdurchsatz von sogenannten Transportreaktoren. Da im Gegensatz zu den sogenannten Transportreaktoren bei der zirkulierenden Wirbelschicht das am Reaktorkopf ausgetragene Material in den Reaktor vollständig zurückgeführt wird, ergibt sich eine wesentlich längere Verweilzeit.

Die Zeit der Nachbehandlung im Bereich von 700 bis 900°C hängt zunächst einmal von der angewendeten Temperatur ab, darüber hinaus aber auch im erheblichen Maße von dem eingesetzten Ausgangsmaterial. Besonders gute Ergebnisse wurden beobachtet bei Verwendung von aus der Entschwefelung von Braunkohlenkraftwerken anfallendem REA-Gips (Braunkohlenrauchgasgips). Es ist aber auch gelungen, Steinkohlenrauchgasgips erfindungsgemäß zu verarbeiten und dabei erstmals einen Anhydrit zu erhalten, der die erfindungsgemäßen Parameter erfüllt.

In den nachfolgenden Beispielen sind der erfindungsgemäße Anhydrit, Verfahren zu seiner Herstellung und Anwendung näher erläutert.

### BEISPIELE

Verschiedene Rauchgasgipse wurden im Trägergasstrom bei einer Temperatur von 380°C zum Anhydrit gebrannt. Anschließend wurden sie in einem zweiten Brennaggregat auf Temperaturen zwischen 800 und 880°C erwärmt und erst dann abgekühlt. Zum Vergleich wurde auch bei 840°C im Trägergasstrom hergestellter Anhydrit untersucht. Die Untersuchung der so erhaltenen Anhydrite führte zu folgenden Ergebnissen:

### BEISPIEL 1

Anhydrit aus Braunkohlenrauchgasgips aus der ersten Stufe wies einen Rehydratationsgrad nach 3 Tagen von 87 % auf. Die Ölzahl betrug 30 g/100 g.

### BEISPIEL 2

Aus dem gleichen Ausgangsmaterial hergestellter Anhydrit, welcher jedoch anschließend erfindungsgemäß in einem Trägergas auf 800°C erhitzt worden war, wies einen Rehydratationsgrad nach 3 Tagen von 86 % und eine Ölzahl von 20 g/100 g auf. Die Kenngröße (Rehydratationsgrad)/(Ölzahl)² betrug 22. Die Druckfestigkeit von hieraus hergestellten Probekörpern betrug 34 N/mm².

### BEISPIEL 3

Wurde das gleiche Material erfindungsgemäß auf 880°C erhitzt, sank der Rehydratationsgrad nach 3 Tagen auf 69 %, aber auch die Ölzahl auf 14 g/100 g. Die Kenngröße (Rehydratationsgrad)/(Ölzahl)² stieg dabei auf 35. Die Druckfestigkeit von abgebundenen Probekörpern stieg auf 56 N/mm².

### BEISPIEL 4

Anhydrit aus Steinkohlenrauchgasgips, erfindungsgemäß hergestellt nach Beispiel 3, hatte einen Rehydratationsgrad nach 3 Tagen von 84 %. Die Ölzahl betrug 20 g/100 g. Die Kenngröße (Rehydratationsgrad)/(Ölzahl)² betrug 21 und die Druckfestigkeit von abgebundenen Probekörpern 34 N/mm².

### BEISPIEL 5

Der gleiche feuchte und feinteilige Steinkohlenrauchgasgips wurde zum Vergleich einstufig bis auf 840°C erhitzt. Das so erhaltene Produkt wies einen Rehydratationsgrad nach 3 Tagen von 67 % auf. Die Ölzahl betrug 25 g/100 g. Die Kenngröße (Rehydratationsgrad)/Ölzahl)² betrug nur 11. Die Druckfestigkeit von abgebundenen Probekörpern betrug nur 29 N/mm².

## Patentansprüche

1. Aus in technischen Prozessen anfallenden feinteiligen Gipsen, insbesondere aus Rauchgasgipsen erbrannter Anhydrit, gekennzeichnet durch einen Rehydratationsgrad nach 3 Tagen von mindestens 60 %, vorzugsweise mindestens 80 %, und einer Ölzahl von maximal 20 g/100 g, vorzugsweise maximal 15 g/100 g.

2. Anhydrit gemäß Anspruch 1, gekennzeichnet durch die Kenngröße (Rehydratationsgrad)/(Ölzahl)² von mindestens 15, vorzugsweise mindestens 30.

3. Anhydrit gemäß Anspruch 1 oder 2 erhältlich durch ein mindestens zweistufiges Brennen von den in technischen Prozessen anfallenden feinteiligen Gipsen, wobei in der (den) ersten Stufe(n) das Ausgangsmaterial zunächst bei Temperaturen zwischen 200 und 500°C, vorzugsweise 350 und 500°C, zum Anhydrit gebrannt wird und erst dann in einer weiteren Stufe auf Temperaturen von 700 bis 900°C erhitzt wird.

4. Anhydrit gemäß einem der Ansprüche 1 bis 3, dadurch gekennzeichnet, daß das Ausgangsmaterial aus der Entschwefelung von Braunkohlenkraftwerken anfallender Rauchgasgips (Braunkohlenrauchgasgips) ist.

5. Verfahren zur Herstellung von Anhydrit mit einem Rehydratationsgrad nach 3 Tagen von mindestens 60 %, vorzugsweise mindestens 80 %, und einer Ölzahl von maximal 20 g/100 g, vorzugsweise maximal 15 g/100 g, dadurch gekennzeichnet, daß in technischen Prozessen anfallender feinteiliger Gips, insbesondere Rauchgasgips, zunächst bei Temperaturen von 200 bis 500°C, vorzugsweise 350 bis 500°C, ausgenommen 480-500°C, zum Anhydrit gebrannt wird und erst dann in einer weiteren Stufe auf Temperaturen von 700 bis 900°C erhitzt wird.

6. Verfahren gemäß Anspruch 5, dadurch gekennzeichnet, daß die erste Stufe des Brennens in einem Trägergas erfolgt.

7. Verfahren gemäß Anspruch 5 oder 6, dadurch gekennzeichnet, daß die zweite Stufe in einem Drehrohrofen erfolgt.

8. Verfahren gemäß einem der Ansprüche 5 bis 7, dadurch gekennzeichnet, daß die erste und/oder zweite Stufe in einer zirkulierenden Wirbelschicht durchgeführt wird.

9. Verfahren gemäß einem der Ansprüche 5 bis 8, dadurch gekennzeichnet, daß als Ausgangsmaterial Braunkohlenrauchgasgips verwendet wird.

10. Verwendung eines Anhydrits gemäß Anspruch 1 bis 4 als Anhydritbinder für die Herstellung von Füll- und Gießmassen sowie Fließestrich.

## Claims

1. An anhydrite, obtained by burning a finely divided gypsum produced in a technical process, especially a flue gas gypsum, characterized by a degree of rehydration, after 3 days, of at least 60%, and preferably of at least 80%, and an oil value of not more than 20 g/100 g, and preferably of not more than 15 g/100 g.

2. The anhydrite according to claim 1, characterized by the specific index of (degree of rehydration)/(oil value)² of at least 15, and preferably at least 30.

3. The anhydrite according to claims 1 or 2, obtainable by burning a finely divided gypsum produced in a technical process in at least two steps, wherein in the first step(s) the starting material is first calcined at temperatures between 200 °C and 500 °C, and preferably 350 °C and 500 °C, to form an anhydrite and only then in a further step is heated to temperatures of from 700 °C to 900 °C.

4. The anhydrite according to any one of claims 1 to 3, characterized in that the starting material is a flue gas gypsum produced in the desulfurization unit of a lignite power station (lignite flue gas gypsum).

5. A process for producing an anhydrite having a degree of rehydration, after 3 days, of at least 60%, and preferably of at least 80%, and a oil value of not more than 20 g/100 g, and preferably of not more than 15 g/100 g, characterized in that a finely divided gypsum produced in a technical process, especially a flue gas gypsum, is first calcined at temperatures from 200 °C to 500 °C, and preferably from 350 °C to 500 °C, except 480-500 °C, to form an anhydrite and only then in a further step is heated to temperatures of from 700 °C to 900 °C.

6. The process according to claim 5, characterized in that the first burning step is carried out in a carrier gas.

7. The process according to claims 5 or 6, characterized in that the second step is carried out in a rotary kiln.

8. The process according to any one of claims 5 to 7, characterized in that the first and/or second step(s) is/are carried out in a circulating fluidized bed.

9. The process according to any one of claims 5 to 8, characterized in that lignite flue gas gypsum is employed as the starting material.

10. Use of an anydrite according to claims 1 through 4 as an anhydrite binder for the production of filling and casting compositions as well as floating intermediate flooring.

## Revendications

1. Anhydrite calcinée obtenue à partir de gypses finement divisés obtenus dans des procédés industriels, en particulier à partir de gypses de désulfuration de gaz de fumées, caractérisée par un degré de réhydratation après 3 jours d'au moins 60 %, de préférence d'au moins 80 %, et par une valeur d'absorption d'huile d'au plus 20 g/100 g, de préférence d'au plus 15 g/100g.

2. Anhydrite selon la revendication 1, caractérisée par la grandeur caractéristique (degré de réhydratation)/ (valeur d' absorption d'huile)² d'au moins 15, de préférence d'au moins 30.

3. Anhydrite selon la revendication 1 ou 2, que l'on peut obtenir grâce à une calcination, au moins en deux étapes, des gypses finement divisés obtenus dans des procédés industriels, le matériau de départ étant calciné en anhydrite, d'abord à des températures comprises entre 200 et 500°C, de préférence entre 350 et 500°C, pendant la ou les premières étapes, et n'étant chauffé ensuite à des températures de 700 à 900°C que lors d'une étape supplémentaire.

4. Anhydrite selon l'une des revendications 1 à 3, caractérisée en ce que le matériau de départ est un gypse de désulfuration des gaz de fumées obtenu lors de la désulfuration dans des centrales thermiques fonctionnant au lignite.

5. Procédé de préparation d'anhydrite avec un degré de réhydratation après 3 jours d'au moins 60 %, de préférence d'au moins 80 %, et une valeur d'absorption d'huile d'au plus 20 g/100 g, de préférence d'au plus 15 g/100 g, caractérisé en ce que du gypse finement divisé obtenu dans des procédés industriels, en particulier de gypse de désulfuration des gaz de fumées, est calciné en anhydrite d'abord à des températures de 200 à 500°C, de préférence de 350 à 500°C, à l'exception des températures comprises entre 480 et 500°C, et ce n'est qu'ensuite, lors d'une étape supplémentaire, qu'il est chauffé à des températures de 700 à 900°C.

6. Procédé selon la revendication 5, caractérisé en ce que la première étape de la calcination se déroule dans un gaz porteur.

7. Procédé selon la revendication 5 ou 6, caractérisé en ce que la deuxième étape se déroule dans un four tubulaire rotatif.

8. Procédé selon l'une des revendications 5 à 7, caractérisé en ce qu'on effectue la première et/ou la deuxième étape dans un lit fluidisé circulant.

9. Procédé selon l'une des revendications 5 à 8, caractérisé en ce qu'on utilise du gypse de désulfuration des gaz de fumées de lignite comme matériau de départ.

10. Utilisation d'une anhydrite selon l'une des revendications 1 a 4 comme liant à base d'anhydrite pour la préparation des masses de remplissage et de coulée, ainsi que pour la préparation de chapes coulées.
